Europäisches Patentamt

European Patent Office

Office européen des brevets

(11) **EP 1 142 897 A1**

(19)

(12) **EUROPÄISCHE PATENTANMELDUNG**

(43) Veröffentlichungstag:
**10.10.2001 Patentblatt 2001/41**

(51) Int Cl.$^7$: **C07F 7/16**

(21) Anmeldenummer: **01102109.4**

(22) Anmeldetag: **31.01.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **06.04.2000 DE 10017153**

(71) Anmelder: **Wacker-Chemie GmbH**
**81737 München (DE)**

(72) Erfinder:
• **Kalchauer, Wilfried, Dr.**
**84489 Burghausen (DE)**

• **Straussberger, Herbert**
**84561 Mehring-Öd (DE)**
• **Streckel, Willibald**
**84561 Mehring-Öd (DE)**
• **Goetze, Ulrich, Dr.**
**84489 Burghausen (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(54) **Verfahren zur Direktsynthese von Organochlorsilanen unter Einsatz von zurückgewonnenem CuCl Katalysator**

(57) Im Verfahren zur Direktsynthese von Organochlorsilanen wird CuCl eingesetzt, welches aus den kupferhaltigen Rückständen der Organochlorsilan-Direktsynthese hergestellt wird, wobei bei der Herstellung des CuCl
in einem ersten Schritt Kupfer aus einer wässrigen Suspension der kupferhaltigen Rückstände mit Mineralsäure und Oxidationsmittel, wobei Mineralsäure oder Oxidationsmittel oder Mineralsäure und Oxidationsmittel Chlor enthalten, zu $CuCl_2$ oxidiert wird, wobei eine wässrige $CuCl_2$-Lösung erhalten wird und in einem zweiten Schritt die wässrige $CuCl_2$-Lösung mit elementarem Eisen zu CuCl reduziert wird.

**Beschreibung**

Gegenstand der Erfindung ist ein Verfahren zur Direktsynthese von Organochlorsilanen, bei dem CuCl eingesetzt wird, welches aus den kupferhaltigen Rückständen der Organochlorsilan-Direktsynthese hergestellt wird.

Bei der Direktsynthese von Organochlorsilanen, insbesondere Methylchlorsilanen wird metallisches Silicium mit Chlormethan in Gegenwart von Kupferkatalysatoren und gegebenfalls von weiteren Co-Katalysatoren und Promotoren umgesetzt. Bei der industriellen Durchführung der Direktsynthese in Wirbelschichtreaktoren werden zusammen mit dem Reaktionsprodukt, dem Rohsilan, und unumgesetzten Chlormethan auch Feinanteile von Silicium und Kupferkatalysator, verunreinigt mit Kohlenstoffpartikeln und verschiedenen Metallverbindungen aus den Nebenbestandteilen des technischen Silicium-Rohstoffes, ausgetragen und in nachgeschalteten Trennaggregaten, z.B. Cyclonen, abgetrennt. Weiterhin fällt ein Reaktorrückstand aus Silicium, Katalysator und Metallhalogeniden an, der kontinuierlich oder diskontinuierlich aus den Wirbelschichtreaktoren ausgetragen wird. Auch Trocknungs- und Filtrationsprozesse führen zum Anfall verunreinigter Feinstäube.

Verfahren zur Rückgewinnung des Kupfers aus Reaktorrückstand und Feinstäuben sind bekannt. Beispielsweise ist aus US-A-5,306,328 bekannt, den Kupferanteil aus Rückständen der Methylchlorsilan-Synthese in lösliche Kupfer(II)salze zu überführen und die Kupfer(II)salze mit Eisenpulver zu Kupfermetall zu reduzieren. Der Nachteil dieses Verfahrens ist, daß Eisen und Kupfer mindestens im molaren Verhältnis von 1:1 eingesetzt werden müssen, und daß, wenn das Kupfer nicht in metallischer Form als Katalysator eingesetzt wird, eine entsprechende Weiterverarbeitung erforderlich ist.

Verfahren zur Herstellung von CuCl aus wässrigen Lösungen sind bekannt. Dabei werden zuerst reine Cu-(II)-Verbindungen oder sogenanntes metallisches Abfallkupfer in Mineralsäuren wie z.B. Salzsäure aufgelöst, es kommen aber auch salzsaure $CuCl_2$-Lösungen zu Einsatz, die bei den Ätzvorgängen für die Leiterplattenherstellung anfallen.

Derartige Lösungen sind im Vergleich zu jenen Lösungen, die bei der wässrigen Aufarbeitung der Prozessrückstände aus der Direktsynthese anfallen, relativ arm an zusätzlichen Verunreinigungen, wie z.B. Metallchloriden. Die kupferhaltigen Lösungen werden nach dem Filtrieren mit Hilfe eines geeigneten Reduktionsmittels, wie z.B. Cu, Fe, Zn, Al, Hydroxylamin, schwefelige Säure, $SO_2$ zu Cu-(I)-Verbindungen reduziert, wobei darauf geachtet wird, daß das gebildete CuCl durch Zugabe von Komplexbildnern, wie z.B. NaCl und/oder Salzsäure, vollständig in gelöster Form vorliegt. Nach einer neuerlichen Filtration wird anschließend durch eine geeignete Maßnahme das Löslichkeitsprodukt von CuCl unterschritten, sodaß das feste CuCl zumindest teilweise ausfällt. Dies kann beispielsweise dadurch erreicht werden, daß die Lösung stark mit Wasser verdünnt wird. Das feste CuCl wird abfiltriert, gewaschen und getrocknet.
Diese Verfahren sind beispielsweise beschrieben in Ullmann' s Encyclopedia of Industrial Chemistry, Band A7, Seite 574.

Die Nachteile bei diesen Verfahren sind, daß durch das starke Verdünnen relativ viel Reaktionsvolumen und Wasser benötigt wird und die anfallende Filtrate aufgearbeitet oder entsorgt werden müssen, daß ein zusätzlicher Filtrationschritt erforderlich ist, und daß von relativ reinen Cu-(II)-Lösungen ausgegangen werden muß.

In DE 901889 wird beschrieben, daß mit Hilfe eines Reduktionsmittels, wie Schwefeldioxid, Natriumbisulfit oder Natriumsulfit, aus einer Kupfer-II-Chloridlösung, Kupfer-(I)-Chlorid in einer Ausbeute von 85-90% hergestellt werden kann. In US-A-4,758,352 wird aufgezeigt, daß bei dem in DE 901889, beschriebenen Verfahren, sich das Kupfer-(I)-Chlorid nicht quantitativ abtrennen läßt. Der Grund dafür wird in Ullmann's Encyclopedia of Industrial Chemistry, 5. Auflage, Band A7, Seite 574 aufgezeigt, in dem dargestellt ist, daß mit steigender Chloridionenkonzentration in der Lösung, die Löslichkeit von CuCl ebenfalls stark ansteigt.

Aufgabe der vorliegenden Erfindung war es, ein Verfahren bereitzustellen, durch das auf einfache Weise und in hohen Ausbeuten aus den kupferhaltigen Rückständen der Organochlorsilan-Direktsynthese CuCl hergestellt werden kann, welches erneut als wirksamer Katalysator in der Organochlorsilan-Direktsynthese eingesetzt werden kann.

Gegenstand der Erfindung ist ein Verfahren zur Direktsynthese von Organochlorsilanen, bei dem CuCl eingesetzt wird, welches aus den kupferhaltigen Rückständen der Organochlorsilan-Direktsynthese hergestellt wird, wobei bei der Herstellung des CuCl
in einem ersten Schritt Kupfer aus einer wässrigen Suspension der kupferhaltigen Rückstände mit Mineralsäure und Oxidationsmittel, wobei Mineralsäure oder Oxidationsmittel oder Mineralsäure und Oxidationsmittel Chlor enthalten, zu $CuCl_2$ oxidiert wird, wobei eine wässrige $CuCl_2$-Lösung erhalten wird und
in einem zweiten Schritt die wässrige $CuCl_2$-Lösung mit elementarem Eisen zu CuCl reduziert wird.

Das Verfahren zeichnet sich dadurch aus, daß CuCl aus relativ stark verunreinigten $CuCl_2$ Lösungen in hohen Ausbeuten und ausreichenden Reinheiten hergestellt werden kann, ohne daß die zuvor beschriebenen Nachteile zum Tragen kommen. Das zurückgewonnene CuCl kann als wirksamer Katalysator in der Organochlorsilan-Direktsynthese eingesetzt werden.

Gegenüber Cu-Oxiden und Kupfer-Metall-Katalysatoren hat der CuCl-Katalysator bei der Direktsynthese den Vorteil, daß zu Beginn die Reaktion schneller anspringt, daß bei vergleichbarer Reaktivität eine geringere Katalysatormenge benötigt wird, und daß bei vergleichbarer Cu-Katalysatormenge, bezogen auf metallisches Kupfer, die Reaktivität höher ist.

Die Gewinnung der Kupfersalzlösung im ersten Schritt aus Prozeßrückständen der Organochlorsilan-, insbesondere Methylchlorsilan-Synthese ist beispielsweise in US-A-5,306,328 beschrieben.

Bei den Prozeßrückständen handelt es sich insbesondere um feste Rückstände, die vorzugsweise unter 1 Gew.-% Silane enthalten.

Vorzugsweise werden im ersten Schritt die Prozeßrückstände mit sauren Waschlösungen, die im Aufarbeitungsprozeß anfallen, suspendiert. Dann wird eine Mineralsäure, vorzugsweise Salzsäure oder Schwefelsäure, zugesetzt und mit Hilfe eines Oxidationsmittels, vorzugsweise Sauerstoff, Chlor, NaOCl oder $H_2O_2$, die Suspension behandelt. Mindestens eine der beiden Komponenten aus Mineralsäure und Oxidationsmittel muß Chlor oder Chlorid enthalten.

Dabei gehen alle, üblicherweise in Prozeßrückständen der Methylchlorsilan-Synthese vorkommenden Metallsalze und ein Teil der Metalle in Lösung, Silicium, ein Großteil der Silicide wie beispielsweise Eisendisilicid und Kohlenstoff bleiben ungelöst. Besonders bevorzugt ist die Gewinnung von Kupfer-(II)-Chlorid mit Salzsäure und Sauerstoff, der als Luftsauerstoff oder als reines Gas eingeblasen werden kann.

Vorzugsweise wird zur Abtrennung von unlöslichen Begleitstoffen, wie feine Kohlenstoffpartikel und Siliciumpartikel die Kupfersalzlösung vor der Weiterverarbeitung filtriert, wobei der Zusatz von Hilfsstoffen wie z.B. Flockungsmitteln, AntiSchaummitteln und Filterhilfsmitteln möglich ist. Der Filterrückstand ist nach dem Waschen weitgehend frei von eluierbaren toxischen Metallverbindungen und kann entweder ordnungsgemäß deponiert werden oder als Rohstoff bzw. Zuschlagstoff in anderen Verfahren wie. z.B. Zuschlagstoff für mineralische Baustoffe zum Einsatz kommen. Die Waschlösungen können wieder zur Suspendierung der Prozeßrückstände eingesetzt werden.

Im zweiten Schritt wird die wässrige $CuCl_2$-Lösung mit elementarem Eisen vorzugsweise unter Rühren umgesetzt. Bevorzugt ist Eisenpulver mit einer mittleren Korngröße im Bereich von 0,1 bis 300 μm, da durch die hohe Oberfläche die Reaktionsgeschwindigkeit erhöht ist.

Im zweiten Schritt kann entweder die $CuCl_2$-Lösung vorgelegt und das Eisenpulver zudosiert werden oder das Eisenpulver vorgelegt und die $CuCl_2$-Lösung zudosiert werden.

Der pH-Wert in der wäßrigen Suspension im zweiten Schritt ist vorzugsweise mittels Salzsäure so einzustellen, daß die Verunreinigungen, die mit der $CuCl_2$-Lösung eingebracht werden, nicht als Hydroxide ausfallen. Gleichzeitig ist in der bevorzugten Ausführungsform ein möglichst hoher pH-Wert anzustreben, um die Löslichkeit von CuCl in der wässrigen Phase möglichst gering zu halten. Die besten Ergebnisse erhält man, wenn der pH-Wert der Suspension 1,5 bis 2,8 beträgt. Bei zu kleinen pH-Werten kann zusätzlich die Geschwindigkeit der unerwünschten Nebenreaktion von Eisen und Salzsäure zu Eisenchlorid und Wasserstoff zu stark ansteigen.

Die Temperatur für die Umsetzung im zweiten Schritt liegt vorzugsweise im Bereich von 10 bis 90°C, da dies den geringsten apparativen Aufwand erfordert. Besonders bevorzugt sind Temperaturen im Bereich von 30 bis 80°C.

Das Gewichtsverhältnis von $CuCl_2$-Lösung zu Eisenpulver wird bevorzugt so gewählt, daß nach der Umsetzung nahezu kein Cu II in der wässrigen Phase und nahezu kein Eisenpulver in der festen Phase vorhanden sind.

Die Reaktion kann unter Schutzgas wie beispielsweise Stickstoff oder Argon durchgeführt werden. Der Einsatz von Schutzgas ist nicht erforderlich, wenn sichergestellt ist, daß nicht durch zu starkes Rühren laufend nennenswerte Mengen an Luftsauerstoff in die Lösung eingebracht werden.

Die wässrige Lösung der Suspension nach der Umsetzung mit Eisen im zweiten Schritt enthält, in Abhängigkeit von den gewählten Reaktionsbedingungen, noch etwa 1 bis 20 g Cu+ Ionen/1 und einen geringen Anteil an Cu II Ionen. Feststoff und Lösung werden voneinander getrennt. Dies kann beispielsweise durch eine Filtration erfolgen. Das CuCl kann anschließend mit Wasser und/oder Alkohol, schwefeliger Säure, Eisessig, Ether gewaschen werden, dies ist aber nicht unbedingt erforderlich. Anschließend wird das CuCl vorzugsweise in Abwesenheit von Luft/Sauerstoff getrocknet, wie beispielsweise unter Inertgas oder im Vakuum.

Das Filtrat aus dem zweiten Schritt enthält hauptsächlich Eisenchlorid und Eisenionen. Der Restgehalt an Cu Ionen im Filtrat des zweiten Schritts wird vorzugsweise in einem dritten Schritt mit elementarem Metall, das in der Spannungsreihe der Elemente unterhalb von Kupfer steht, zu elementarem Kupfer reduziert. Als elementare Metalle eignen sich besonders Zink, Aluminium und insbesondere Eisen.

Das so gewonnene elementare Kupfer wird vorzugsweise im zweiten Schritt zugesetzt und komproportioniert dort mit $CuCl_2$ zu CuCl. Dadurch kann das Kupfer nahezu verlustfrei wiedergewonnen werden.

Wird als Reduktionsmittel im dritten Schritt Eisen verwendet, kann das erhaltene Filtrat bei der Abwasseraufbereitung zum Einsatz kommen.

Eine Anreicherung von Verunreinigung, die aus den Prozeßrückständen der Organochlorsilan-Synthese stammen, ist nicht möglich, da diese nach dem zweiten bzw. nach dem dritten Schritt mit dem Filtrat ausgeschleust werden.

Bei der Organochlorsilan-Synthese kann durch die Anwendung des erfindungsgemäßen Verfahrens fast das ganze, als Katalysator eingesetzte Kupfer zurückgewonnen werden, mit dem Vorteil, daß es ohne zusätzliche Verarbeitungsschritte als sehr reaktives CuCl anfällt. Der Kupferkreislauf ist weitgehend geschlossen. Geringe bei der Organochlorsilan-Synthese unvermeidliche Kupferverluste können dadurch ausgeglichen werden, daß man zu den Verfahrensschritten metallisches Kupfer, Kupferverbindungen oder wässrige Kupferlösungen einschleust, wobei an die Reinheit dieser Stoffe keine hohen Anforderungen gestellt werden müssen.

In den nachfolgenden Beispielen sind, falls jeweils nicht anders angegeben,

    a) alle Mengen auf die Masse bezogen;
    b) alle Drücke 0,10 MPa (abs.);
    c) alle Temperaturen 20°C.

**Beispiele**

**Beispiel 1: erster Schritt, Herstellung einer CuCl$_2$-Lösung aus Prozeßrückständen der Methylchlorsilan-Synthese**

400 g eines Gemisches aus Reaktorrückstand, Cyclonstaub und Trocknerstaub aus der Rohsilanfiltration wurden unter Rühren in 1000 ml Waschwasser aus einer Cu-Laugung (siehe Ende von Beispiel 1) eingebracht. Die Suspendierung erfolgte unter Stickstoff als Inertgas, da die Prozeßrückstände pyrophor sein können.
In diese Suspension wurde anschließend bei ca. 50°C mit Hilfe eines Gas-Einleitrohres Luft eingeleitet (ca. 300 1/h), durch eine kontinuierliche Zugabe von 20%iger Salzsäure wurde der pH in der Suspension im Bereich von 1 bis 3 gehalten. Nach 5 Stunden Laugungszeit wurde mit 20 %iger Salzsäure ein pH von 1,7 eingestellt, die Lösung filtriert und der feste Rückstand mit 1000 ml Wasser gewaschen.

Ein Eluatversuch am feuchten Rückstand nach DIN 38414 ergab 0,008 g/l eluierbares Kupfer (Zweite allgemeine VwV zum Abfallgesetz - Anhang D; Grenzwert für Cu: max 10 mg/l).

Im Filtrat wurden folgende Konzentrationen gemessen:

| Kupfer | 61,5 g/l |
|---|---|
| Aluminium | 3,9 g/l |
| Calcium | 0,6 g/l |
| Eisen | 2,0 g/l |
| Magnesium | 0,3 g/l. |

Normiert auf die gleiche Cu-Konzentration konnten vergleichsweise in einer "Abfallsäure" aus einer Leiterplattenherstellung folgende Konzentration gemessen werden:

| Aluminium | 0,007 g/l |
|---|---|
| Calcium | 0,002 g/l |
| Eisen | 0,016 g/l. |

**Beispiel 2: zweiter Schritt, Herstellung von CuCl über eine Umsetzung mit Eisen und dritter Schritt, Herstellung von CuCl durch Komproportionierung von aus dem Filtrat des zweiten Schritts rückgewonnenen Kupfermetalls**

In einem Rührgefäß wurden 1000 ml Wasser, 16 g feuchtes Kupfer mit einem Wassergehalt von 20% - hergestellt aus einer Eisenzementation des, in Beispiel 2 anfallenden Filtrats aus der CuCl-Herstellung - und 48 g Eisenpulver mit einer mittleren Teilchengröße von 60 bis 70 µm vorgelegt und auf 50°C erwärmt. Innerhalb von 20 Minuten wurden, unter Stickstoff als Inertgas, 1500 ml einer nach Beispiel 1 hergestellten Kupfer-(II)-Chlorid-Lösung zugesetzt. Anschließend wurde 60 Minuten lang nachgerührt, auf Raumtemperatur abgekühlt und mittels 20%iger Salzsäure ein pH von 1,9 eingestellt. Die Abtrennung des gebildeten, festen CuCl von der Eisenchlorid-Lösung erfolgte über eine Nutsche unter Stickstoff als Schutzgas. Nach Waschen mit 150 ml Wasser und Trockensaugen erfolgte die Trockung des CuCl im Vakuum bei 80°C.

Filtrat und Waschwasser wurden vereint. Die Gesamt-Konzentration an Cu-Ionen wurde mittels ICP bestimmt und betrug 4,8 g/l.
In diese Lösung wurden 20 g Eisenpulver eingerührt. Anschließend wurde nach einer Nachrührzeit von 45 Minuten und einem Einstellen des pH-Wertes auf 1,9 das abgeschiedene metallische Kupfer abfiltriert (16 g feuchtes Material, mit einem Wassergehalt von 20%).

In der Eisenchlorid-Lösung wurde eine Gesamtkupfer-Konzentration von kleiner 0,05 g/l gemessen.

Am CuCl wurden folgende elementaranalytische Daten ermittelt:

| Kupfer | 63,2% |
|---|---|
| Aluminium | 0,08% |
| Calcium | 0,02% |
| Eisen | 0,30% |
| Magnesium | 0,01%. |

**Beispiele 3 und 4: Methylchlorsilan-Synthese mit Kupferkatalysatoren**

Versuchsanlage:

Labor-Wirbelschichtreaktor (senkrechtes Glasrohr mit einem Innendurchmesser von 25 mm und einer Höhe von 500 mm) mit Heizwicklung, Gasverteilerfritte, Destillationsbrücke mit Solekühlung und Vorlagekolben.

Standardisierte Vorgehensweise:

[A] g Kupferkatalysator, 1g Zinkoxid, 8 mg Zinnpulver und 120g Siliciumpulver in der Korngröße 70 - 250μm wurden innig durchmischt und in den Reaktor gefüllt und unter einem Stickstoffstrom von 40 l/h auf 340°C erwärmt. Anschließend wurden 40 l/h Chlormethan durch den Reaktor geleitet und die Kontaktmasse auf 395°C erwärmt. Nach einer Induktionszeit beginnt die Silanbildung, die Reaktionstemperatur wird auf 360°C reduziert und 50 ml Methylchlorsilane werden aufgefangen (Startphase). Anschließend werden weitere 30 ml Methylchlorsilane gesammelt. Die Zeit zur Bildung dieser 30 ml Silane wird als Produktionsphase bezeichnet, die Produktionsrate (PR2) errechnet sich nach der Formel

$$PR2 = \frac{\text{mg Methylchlorsilane in der Produktionsphase}}{\text{Oberfläche des Siliciums x Minuten in der Produktionsphase}}$$

Die Silanzusammensetzung der 30 ml Methylchlorsilane wurde mittels GC-Analyse in Gewichtsprozent ermittelt.

| Beispiel | Cu-Katalysator | Induktionzeit | PR2 | Dimethyldichlorsilan |
|---|---|---|---|---|
| 3 | 6,09 CuO | 27 Minuten | 58 | 84,9% |
| 4 | 7,3g CuCl | 4 Minuten | 125 | 87,9% |

Der CuO-Katalysator aus Beispiel 3 wurde nach dem in US-A-5,306,328, Beispiel 5 beschriebenen Verfahren hergestellt. Bezogen auf den Cu-Gehalt, entsprechen 6,0g CuO 7,3 g CuCl-Katalysator.

Mit Beispiel 4 wird der Nachweis geliefert, daß

a) die Induktionszeit bei den erfindungsgemäß hergestellten Katalysatoren kürzer ist als bei den nach US-A-5,306,328 hergestellten Katalysatoren und

b) bei gleicher Kupferkatalysatormenge, bezogen auf metallisches Kupfer, CuCl eine höhere Reaktivität liefert.

**Patentansprüche**

1. Verfahren zur Direktsynthese von Organochlorsilanen, bei dem CuCl eingesetzt wird, welches aus den kupferhaltigen Rückständen der Organochlorsilan-Direktsynthese hergestellt wird, wobei bei der Herstellung des CuCl

in einem ersten Schritt Kupfer aus einer wässrigen Suspension der kupferhaltigen Rückstände mit Mineralsäure und Oxidationsmittel, wobei Mineralsäure oder Oxidationsmittel oder Mineralsäure und Oxidationsmittel Chlor enthalten, zu $CuCl_2$ oxidiert wird, wobei eine wässrige $CuCl_2$-Lösung erhalten wird und
in einem zweiten Schritt die wässrige $CuCl_2$-Lösung mit elementarem Eisen zu CuCl reduziert wird.

2. Verfahren nach Anspruch 1, wobei die im ersten Schritt eingesetzte Mineralsäure Salzsäure oder Schwefelsäure, ist.

3. Verfahren nach Anspruch 1 oder 2, wobei das im ersten Schritt eingesetzte Oxidationsmittel aus Sauerstoff, Chlor, NaOCl und $H_2O_2$ ausgewählt wird.

4. Verfahren nach Anspruch 1 bis 3, bei dem das $CuCl_2$ im Filtrat des zweiten Schritts in einem dritten Schritt mit elementarem Metall, das in der Spannungsreihe der Elemente unterhalb von Kupfer steht, zu elementarem Kupfer reduziert wird.

5. Verfahren nach Anspruch 4, bei dem im dritten Schritt als elementares Metall Eisen eingesetzt wird.

6. Verfahren nach Anspruch 4 oder 5, bei dem das im dritten Schritt gewonnene elementare Kupfer im zweiten Schritt zugesetzt wird und dort mit $CuCl_2$ zu CuCl komproportioniert.

**Europäisches Patentamt**

**EUROPÄISCHER RECHERCHENBERICHT**

Nummer der Anmeldung

EP 01 10 2109

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,Y | DE 901 889 C (WACKER CHEMIE GMBH) 18. Januar 1954 (1954-01-18) * das ganze Dokument * | 1-3 | C07F7/16 |
| D,Y | EP 0 550 857 A (WACKER CHEMIE GMBH) 14. Juli 1993 (1993-07-14) * Spalte 2, Zeile 39 - Zeile 56; Ansprüche 1-7; Beispiele 1-6 * | 1-3 | |
| Y | * Spalte 2, Zeile 23 - Zeile 32 * | 4,5 | |
| D,Y | EP 0 210 418 B (BAYER AG) 4. Februar 1987 (1987-02-04) * Spalte 2 - Spalte 8 * | 1-3 | |
| Y | EP 0 682 032 A (HUELS CHEMISCHE WERKE AG) 15. November 1995 (1995-11-15) * Spalte 6; Ansprüche 1-8 * | 1-3 | |
| Y | DATABASE CHEMABS 'Online! CHEMICAL ABSTRACTS SERVICE, COLUMBUS, OHIO, US; NIE, YUN ET AL: "Industrial practice of recovery of copper from industrial wastewater" retrieved from STN Database accession no. 129:220485 XP002166036 * Zusammenfassung * & HUANJING BAOHU (BEIJING) (1998), (2), 31-32 , | 1,4,5 | **RECHERCHIERTE SACHGEBIETE (Int.Cl.7)** C07F |
| L | DE 42 05 980 A (NUENCHRITZ CHEMIE GMBH) 2. September 1993 (1993-09-02) * das ganze Dokument * | 1,2 | |

Der vorliegende Recherchenbericht wurde für alle Patentansprüche erstellt

| Recherchenort | Abschlußdatum der Recherche | Prüfer |
|---|---|---|
| MÜNCHEN | 25. April 2001 | Richter, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                EP 01 10 2109

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-04-2001

| Im Recherchenbericht angeführtes Patentdokument | Datum der Veröffentlichung | Mitglied(er) der Patentfamilie | Datum der Veröffentlichung |
|---|---|---|---|
| DE  901889    C |  | KEINE |  |
| EP  0550857   A | 14-07-1993 | DE    4142432 A | 24-06-1993 |
|  |  | DE   59207129 D | 17-10-1996 |
|  |  | ES    2091392 T | 01-11-1996 |
|  |  | JP    2716050 B | 18-02-1998 |
|  |  | JP    5255713 A | 05-10-1993 |
|  |  | NO     924938 A | 21-06-1993 |
|  |  | US    5306328 A | 26-04-1994 |
| EP  0210418   B | 04-02-1987 | DE    3523543 A | 15-01-1987 |
|  |  | DE    3684192 A | 16-04-1992 |
|  |  | EP    0210418 A | 04-02-1987 |
|  |  | JP    1834623 C | 29-03-1994 |
|  |  | JP    5045525 B | 09-07-1993 |
|  |  | JP   62007626 A | 14-01-1987 |
|  |  | US    4758352 A | 19-07-1988 |
| EP  0682032   A | 15-11-1995 | DE    4416608 A | 16-11-1995 |
| DE  4205980   A | 02-09-1993 | KEINE |  |

EPO FORM P0461